# EUROPEAN PATENT SPECIFICATION

(11) **EP 3 005 248 B1**
(45) Date of publication and mention of the grant of the patent: **08.01.2020**
(21) Application number: 14736532.4
(22) Date of filing: 06.06.2014
(51) Int. Cl.: G06K 19/077, G05B 19/00, H04L 29/08

(54) **PROCESS CONTROL SYSTEM FIELD DEVICES USING RFID DEVICES**
FELDGERÄTE IN EINEM PROZESSSTEUERUNGSSYSTEM MIT FUNKTRANSPONDERN
DISPOSITIFS DE CHAMP DANS UN SYSTÈME DE CONTRÔLE DE PROCESSUS AVEC TRANSPONDEURS RADIO

(30) Priority: 07.06.2013 US 201361832524 P
(43) Date of publication of application: 13.04.2016
(73) Proprietor: Fisher Controls International LLC, Marshalltown, IA 50158 (US)
(72) Inventor: LOVELL, Michael, Ken, Marshalltown, IA 50158 (US); JUNK, Kenneth, W., Marshalltown, IA 50158 (US)
(74) Representative: Foot, Paul Matthew James
(86) International application number: PCT/US2014/041265
(87) International publication number: WO 2014/197779

(56) References cited:
- EP-A1- 1 832 943
- DE-A1-102011 081 517
- DE-A1-102011 084 789
- DE-A1-102012 214 693
- US-A1- 2006 200 256
- US-A1- 2007 021 140
- US-A1- 2007 114 280
- US-A1- 2009 303 898
- US-A1- 2013 141 888

## Description

### FIELD OF THE DISCLOSURE

This disclosure relates generally to process control systems and, more particularly, to methods and apparatus to manage and maintain process control system field devices using RFID devices.

### BACKGROUND

Process control systems, like those used in chemical, petroleum or other processes, typically include one or more process controllers communicatively coupled to one or more field devices via analog, digital or combined analog/digital buses. The field devices, which may be, for example, instruments, valve positioners, switches and transmitters (e.g., temperature, pressure and flow rate sensors), perform process control functions within the process such as opening or closing valves and measuring process control parameters. The process controllers receive signals indicative of process measurements made by the field devices and then process this information to generate control signals to implement control routines, to make other process control decisions, and to initiate process control system alarms.

Information from the field devices and/or the controller is usually made available over a data highway or communication network to one or more other devices or systems, such as operator work stations, personal computers, data historians, report generators, centralized databases, etc. Such devices or systems are typically located in control rooms and/or other locations remotely situated relative to the harsher plant environment. These devices or systems, for example, run applications that enable an operator to perform any of a variety of functions with respect to the process implemented by a process control system, such as viewing the current state of a process, changing an operating state, changing settings of a process control routine, modifying the operation of the process controllers and/or the field devices, viewing alarms generated by field devices and/or process controllers, simulating the operation of the process for the purpose of training personnel and/or evaluating the process, etc.

DE 10 2012 214 693 discloses a sensor device of automation equipment with a memory device. EP1832943 discloses a method for connecting a defective electronic with another electronic device over a communication line. US2013/0141888 discloses a field device for automation technology with a metal housing for electronics.

### SUMMARY

The invention is defined by the independent claims. Preferred embodiments are set out in the dependent claims.

### BRIEF DESCRIPTION OF THE DRAWINGS

FIG. 1 is a schematic illustration of an example process control system within which the teachings of this disclosure may be implemented.
FIG. 2 illustrates an example manner of implementing the example RFID device of FIG. 1.
FIG. 3 illustrates an example manner of implementing encrypted data records in the example RFID device of FIG. 2.
FIG. 4 illustrates a particular implementation of the example RFID device of FIG. 1 and/or 2 to be coupled to an actuator via a valve controller to control a valve.
FIG. 5 is a flowchart representative of an example method for implementing the example RFID device of FIGS. 1, 2, and/or 4 to wirelessly communicate data from a field device to a local RFID reader/writer.
FIG. 6 is a flowchart representative of an example method for implementing the example RFID device of FIGS. 1, 2, and/or 4 to provide data from a field device requested locally via a RFID reader/writer.
FIG. 7 is a flowchart representative of an example method for implementing the example RFID device of FIGS. 1, 2, and/or 4 to provide data to the RFID device associated with a field device generated locally via a RFID reader/writer.
FIG. 8 is a flowchart representative of an example method of replacing a first field device in the example process control system 100 with a second replacement field device using the example RFID device of FIGS. 1, 2, and/or 4 to automatically configure the second replacement field device.
FIG. 9 is a schematic illustration of an example processor platform that may be used and/or programmed to carry out the example methods of FIG. 5, 6, and 7, and/or, more generally, to implement the example RFID device of FIGS. 1, 2, and/or 4.

### DETAILED DESCRIPTION

While field devices located throughout a process control system may be monitored, along with their corresponding parameters, from a central, remotely located control room, there are circumstances where operators, engineers, and/or other plant personnel are located in the field near the field devices such as, for example, during the inspection, maintenance and/or repair of field devices and/or other control elements within a process plant. Frequently, maintenance and repair is a planned and time-driven plant activity dependent upon swift access to detailed plant information. When field devices and/or final control elements fail, the inability to access technical information necessary to complete the repairs while plant personnel are located in the field near such components can result in costly waste and lost production. More reliable equipment and predictive maintenance via prognostic algorithms are goals in current maintenance concepts that require access to robust maintenance and repair information.

Such maintenance programs are often plagued with records and parts ordering systems that contain misfiled, out-of-date, incomplete and/or inaccurate records. Further, without an integrated enterprise solution, data can be located in multiple physical locations and/or housed in electronic data records that are not quickly accessible by maintenance personnel during a walk-down. As part of a typical walk-down, every piece of equipment is examined, and nameplate specifications, such as model and serial numbers, are recorded. A detailed set of attributes for each type of equipment also is collected.

Additionally, in maintenance situations where local replacement of a field device is required, device configuration and commissioning can become a significant issue. Specifically, field devices that include embedded microprocessors and/or microcontrollers may have complex or complicated configurations that require maintenance technicians to reference technical data stored remotely throughout the enterprise solution. In many such situations, technicians may rely on written records that may not be fully up to date and/or may be otherwise incomplete. Further, in circumstances where technicians connect to the enterprise solution to retrieve the needed technical data, access to the data can be slow (e.g., based on the communication protocols implemented throughout the enterprise to convey data). Accordingly, in such situations, among other situations where plant personnel are local to the field devices, it is desirable to enable the plant personnel to communicate with the field devices that are able to store relevant technical data locally to provide complete and up to date information without depending upon slow communication speeds to retrieve the same information stored at a remote site.

In some instances, plant personnel carry portable handheld communicators with which they may communicate with and/or interrogate a device of interest. However, in many such instances, physically connecting a portable communicator device to a field device requires the plant personnel to, for example, unscrew and remove a terminal cap of the field device. As a result, access is typically limited to field devices that are out of service because removing a terminal cap from a currently operating field device (i.e. a field device in service) would violate plant safety standards. To overcome this obstacle, intrinsically safe wireless transceivers have been implemented to communicate with field devices and then wirelessly transmit the data elsewhere, including a handheld wireless receiver carried by nearby plant personnel.

Although wireless transceivers are an improvement, currently known wireless transceivers suffer from several limitations. For example, many known wireless transceivers rely on loop power provided to the corresponding field device to charge batteries and/or capacitors to power wireless transmissions. As many field devices are implemented on a tight power budget as a result of the low voltage signal provided by the loop power, wireless communications by many known wireless transceivers are limited to periods of time where sufficient power is available and/or after a period of time where sufficient power has been scavenged from the loop power. As such, many known wireless transceivers are not conducive to high speed communications and/or transfers of significant amounts of data. Additionally, many known wireless transceivers are in serial communication with a wired modem associated with the particular communication protocol implementing the interaction of field devices within the process control system. As a result, the communication speed of the wireless transceivers is limited to the communication speed of the corresponding protocol, which can be relatively slow (e.g., the well-known HART protocol is limited to 1200 baud). Further, because known wireless transceivers typically rely on loop power to function, wireless transmissions are only possible when the process plant is running and the particular field device is not otherwise unpowered (e.g., not placed out of service due to maintenance).

The above obstacles are overcome and high speed local communications with a field device, among various other advantages, are realized through the implementation of the teachings disclosed herein and developed more fully below. In particular, the teachings disclosed herein achieve wireless communications through the use of radio-frequency identification (RFID), which is an extremely energy efficient technology. For example, ultrahigh frequency (UHF) passive tags receive power from an electromagnetic field (EMF) generated from a nearby handheld reader (e.g., typically within a range of approximately 30 feet/9.1 metres). Semi-passive tags use local power (e.g., a battery) to power internal circuits, but still rely on power from a handheld reader for communication to the reader. With the reliance on local power for communications, semi-passive tags can have longer read ranges than passive tags. Active tags use local power to power both internal circuits and to communicate with a reader.

In some disclosed examples, a passive and/or semi-passive tag is physically and communicatively coupled to a field device within a process control system. In such examples, the tag may draw power (e.g., a semi-passive configuration) from loop power (provided by the control system to operate the field device) to communicate with the field device and/or gather data from the field device. Once data from the field device is gathered, in some examples, the tag may transmit the data to a nearby handheld reader based on power received from an EMF of the reader. As such, plant personnel local to the field device can wirelessly communicate with the field device in a manner that maintains plant safety policy (e.g., no need to unscrew and remove a terminal cap). Additionally, such communications can be accomplished when the field device is active or running and/or when the device is out of service or otherwise without power (e.g., a passive configuration). In some examples, a small amount of power can be harvested from the loop power supplied to the field device to implement a semi-passive tag design to improve communication range relative to a passive tag design.

Furthermore, while RFID tags typically have limited onboard memory, in some examples, as data is gathered from the field device, the data is stored in a separate non-volatile memory that is accessible by the RFID tag when needed based on a request via a portable RFID reader/writer. By gathering and storing the data in this manner, the data is effectively cached for quick retrieval without the limitation of slow communications based on the power consumption requirements of other known wireless transceivers and/or based on the requirements of the communication protocol implemented over the process control system. Further, the separate non-volatile memory provides extra memory for a corresponding field device, which may be used to store additional information related to the identification, maintenance, and/or commissioning of the field device to assist in maintaining and/or repairing faulty devices. In some examples, communications from a central control room may also be written to the non-volatile memory for retrieval by plant personnel during a walk-down and/or at any other time. Further, in some examples, a portable RFID reader/writer can be used to update and/or provide additional information to the non-volatile memory for subsequent reference and access. Additionally, in some examples the writing of data to the non-volatile memory and the corresponding access of the data is implementing using asymmetric cryptography to certify and/or authenticate the validity of the data.

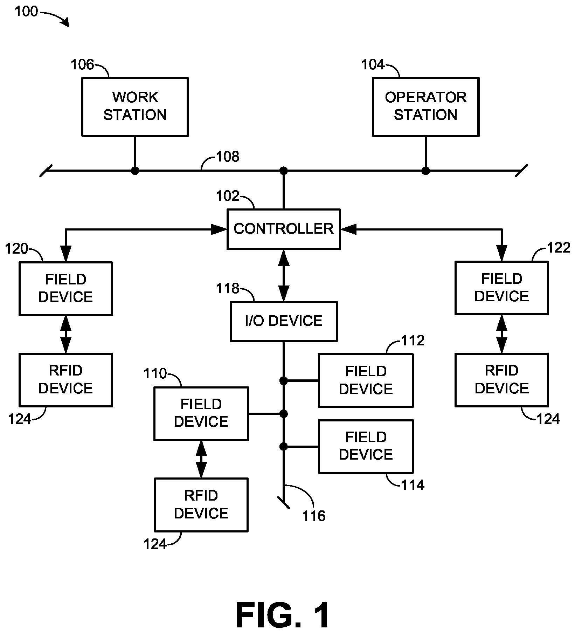

FIG. 1 is a schematic illustration of an example process control system 100 within which the teachings of this disclosure may be implemented. The example process control system 100 of FIG. 1 includes one or more process controllers (one of which is designated at reference numeral 102), one or more operator stations (one of which is designated at reference numeral 104), and one or more work stations (one of which is designated at reference numeral 106). The example process controller 102, the example operator station 104 and the example work station 106 are communicatively coupled via a bus and/or local area network (LAN) 108, which is commonly referred to as an application control network (ACN).

The example operator station 104 of FIG. 1 allows an operator, engineer, and/or other plant personnel to review and/or operate one or more operator display screens and/or applications that enable the plant personnel to view process control system variables, states, conditions, alarms; change process control system settings (e.g., set points, operating states, clear alarms, silence alarms, etc.); configure and/or calibrate devices within the process control system 100; perform diagnostics of devices within the process control system 100; and/or otherwise interact with devices within the process control system 100.

The example work station 106 of FIG. 1 may be configured as an application station to perform one or more information technology applications, user-interactive applications and/or communication applications. For example, the work station 106 may be configured to perform primarily process control-related applications, while another work station (not shown) may be configured to perform primarily communication applications that enable the process control system 100 to communicate with other devices or systems using any desired communication media (e.g., wireless, hardwired, etc.) and protocols (e.g., HTTP, SOAP, etc.). The example operator station 104 and the example work station 106 of FIG. 1 may be implemented using one or more work stations and/or any other suitable computer systems and/or processing systems. For example, the operator station 104 and/or work station 106 could be implemented using single processor personal computers, single or multiprocessor work stations, etc.

The example LAN 108 of FIG. 1 may be implemented using any desired communication medium and protocol. For example, the example LAN 108 may be based on a hardwired and/or wireless Ethernet communication scheme. However, any other suitable communication medium(s) and/or protocol(s) could be used. Further, although a single LAN 108 is illustrated in FIG. 1, more than one LAN and/or other alternative pieces of communication hardware may be used to provide redundant communication paths between the example systems of FIG. 1.

The example controller 102 of FIG. 1 may be, for example, a DeltaV™ controller sold by Fisher-Rosemount Systems, Inc., an Emerson Process Management company. However, any other controller could be used instead. Further, while only one controller 102 is shown in FIG. 1, additional controllers and/or process control platforms of any desired type and/or combination of types could be coupled to the LAN 108. In any case, the example controller 102 performs one or more process control routines associated with the process control system 100 that have been generated by a system engineer and/or other plant personnel using the operator station 104 and which have been downloaded to and/or instantiated in the controller 102.

As shown in the illustrated example of FIG. 1, the example controller 102 may be coupled to a plurality of smart field devices 110, 112, 114 via a data bus 116 and an input/output (I/O) gateway 118. The smart field devices 110, 112, 114 may be Fieldbus compliant instruments, transmitter, sensors, etc., in which case the smart field devices 110, 112, 114 communicate via the data bus 116 using the well-known Foundation Fieldbus protocol. Of course, other types of smart field devices and communication protocols could be used instead. For example, the smart field devices 110, 112, 114 could instead be Profibus and/or HART compliant devices that communicate via the data bus 116 using the well-known Profibus and HART communication protocols. Additional I/O devices (similar and/or identical to the I/O gateway 118 may be coupled to the controller 102 to enable additional groups of smart field devices, which may be Foundation Fieldbus devices, HART devices, etc., to communicate with the controller 102.

In addition to the example smart field devices 110, 112, 114, coupled via the I/O gateway 118, one or more smart field devices 122 and/or one or more non-smart field devices 120 may be communicatively coupled to the example controller 102. The example smart field device 122 and non-smart field device 120 of FIG. 1 may be, for example, conventional 4-20 milliamp (mA) or 0-24 volts direct current (VDC) devices that communicate with the controller 102 via respective hardwired links. In such examples, the hardwired links enable the field device 120 to communicate with the controller 102 and provide electrical power to the field device 120 (e.g., loop power).

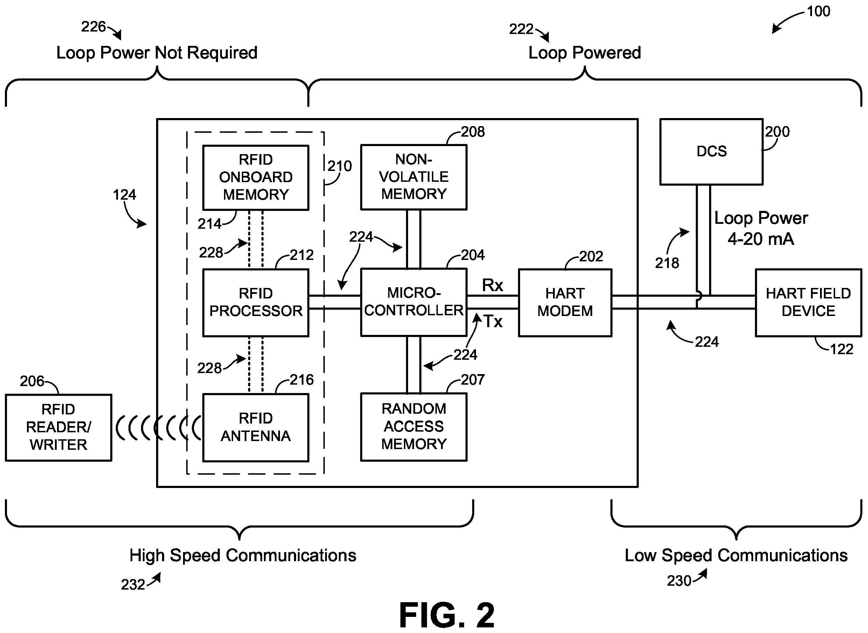

Additionally, each of the field devices 110, 120, 122 are shown in the illustrated example of FIG. 1 coupled to a corresponding RFID device 124. With respect to the smart field devices 110, 122 in the illustrated example, the corresponding RFID device 124 converts outbound data obtained from the field devices 110, 122 (e.g., parameter values, diagnostic information, etc.) according to a particular communication protocol associated with the field devices 110, 122 (e.g., HART, Profibus, Foundation Fieldbus, etc.) for transmission to an RFID reader/writer 206 (FIG. 2). In addition to storing and/or communicating process control data, in some examples, the RFID device 124 stores other information (e.g., maintenance records, parts lists, serial card information, etc.) associated with the corresponding smart field device 110, 122 or non-smart field device 120 as described in further detail below. In some examples, such information is also communicated to the RFID device 124 via the corresponding field device. Additionally or alternatively, in some examples, such data is communicated via the RFID reader/writer 206. Accordingly, the RFID device 124 enables plant personnel to communicate locally and wirelessly with the field devices 110, 120, 122 without power consumption requirements that may decrease the power efficiency of the process control system (e.g., by drawing on the loop power) and/or increase maintenance costs (e.g., by requiring the acquisition and/or replacement of batteries).

An example RFID device 124 constructed in accordance with the teachings described herein is shown and described below in connection with FIG. 2. It should be appreciated that a single RFID device 124 may be used to interact with more than one of the field devices 110, 112, 114, 120, 122 by moving the RFID device 124 from one device to another as dictated by the circumstances of the process system and the particular needs of plant personnel. Additionally or alternatively, as shown in FIG. 1, multiple RFID devices may be connected to any or all of the field devices 110, 112, 114, 120, 122. More particularly, in some examples, each field device 110, 112, 114, 120, 122 (or at least some of the field devices) are coupled to a separate RFID device 124 and remained coupled to the corresponding RFID device 124 throughout an entire lifecycle, or portion thereof, of the field device. In some such examples, the RFID device 124 contains a non-volatile memory 208 (FIG. 2) separate from any memory internal to the corresponding field device 122. In such examples, the RFID device 124 is capable of storing serial card data and/or any other data associated with the identification, maintenance, configuration, and/or operation of the field device 122. Typically, the memory within a field device is relatively limited such that much of this information (e.g., documentation and historical records of maintenance, repairs, parts replacements, etc.) has been remotely stored at a central maintenance database for the entire enterprise. However, by coupling the RFID device 124 with its own non-volatile memory 208 in accordance with the teachings disclosed herein, this information can be accessed quickly and easily by plant personnel local to the field device (e.g., during a walk-down) with an RFID reader/writer 206. Furthermore, in such examples, the information associated with the field device 122 stored on the RFID device 124 is accessible even when the field device 122 is taken out of service and/or removed from the plant environment (e.g., when shipped off for repairs). Additionally, as described in greater detail below, in some examples, at least some of the information may be stored in an onboard memory of an RFID tag 210 (FIG. 2) within the RFID device 124 such that the information can be accessed without a power source to the field device 122.

While FIG. 1 illustrates an example process control system 100 within which the methods and apparatus to communicate with process control system field devices using an RFID device described in greater detail below may be advantageously employed, the methods and apparatus described herein may, if desired, be advantageously employed in other process plants and/or process control systems of greater or less complexity (e.g., having more than one controller, across more than one geographic location, etc.) than the illustrated example of FIG. 1.

FIG. 2 illustrates an example manner of implementing the example RFID device 124 of FIG. 1 connected to the field device 122 of the process control system 100 of FIG. 1 (the remainder of which is represented by the distributed control system (DCS) block 200). In the illustrated example, the RFID device 124 includes a HART modem 202, a microcontroller 204 associated with a random access memory RAM 207 and a non-volatile memory 208. The RFID device 124 also includes an RFID tag 210 that comprises a main RFID processor 212, an RFID onboard memory 214 (also a form of non-volatile memory), and an RFID antenna 216. In some examples, the RFID processor 212, the RFID onboard memory 214, and the RFID antenna 216 are all incorporated onto a single integrated circuit (IC).

In the illustrated example of FIG. 2, the field device 122 is identified as a HART-compliant field device. As stated above, the teachings of this disclosure may be implemented in connection with a field device associated with any suitable communication protocol. However, the following disclosure is explained by way of example in terms of the HART communication protocol. Thus, as shown in FIG. 2, the HART field device 122 is communicatively coupled to the DCS 200 via a 2-wire connection 218 (represented by the two solid lines) to communicate according to the HART protocol. In addition to transmitting and receiving control signals over the 2-wire connection 218, the field device 122 also draws its power from the 2-wire connection 218 (e.g., the field device is loop powered). Additionally, in the illustrated example, the RFID device 124 is linked to the 2-wire connection 218 such that the HART field device 122 is communicatively coupled to the RFID device 124 via the HART modem 202 and to enable the RFID device 124 draw power from the 4-20 mA loop power provided via the 2-wire connection 218.

The example HART modem 202 is configured to transmit information from the HART field device 122 according to the HART protocol (or any other suitable communication protocol) to the microcontroller 204 according to a serial communication protocol (e.g., universal serial bus (USB), Ethernet, synchronous serial (e.g., serial peripheral interface (SPI) bus), etc.). Additionally, the example HART modem 202 is configured to transmit information from the microcontroller 204 according to the serial communication protocol to the HART field device 122 according to the HART protocol.

The example microcontroller 204 controls the timing and/or scheduling of data sent to and/or from the field device 122 and/or the RFID tag 210. In some examples, the data includes requests to poll information (e.g., process variable values, alarms, etc.) from the field device 122. In other examples, the data includes commands instructing the field device 122 to implement certain functionality (e.g., tuning, calibration, diagnostics, commissioning, etc.). Data received by the microcontroller 202 of the illustrated example may be stored temporarily in the RAM 207 and/or long-term in the non-volatile memory 208. Additionally or alternatively, the data received by the microcontroller 204 may be sent to the RFID processor 212 for subsequent storage in the corresponding RFID onboard memory 214 and/or transmitted to an external RFID reader/writer 206 via the RFID antenna 216.

As identified by brace 230, communications between the field device 122, the HART modem 202 of the RFID device 124, and the DCS 200 are relatively slow or low speed because the communications are governed by the HART protocol, which is limited to about 1200 baud. In contrast, the communications between the other elements illustrated in FIG. 2, as identified by brace 232, are relatively high speed in that they are based on a high speed serial communication protocol (e.g., SPI bus), which may achieve approximately 115 kbps. Thus, by implementing the example RFID device 124 in accordance with the teachings disclosed herein, relatively slow HART based communications may be monitored overtime and cached or stored in the non-volatile memory 208 and/or the RFID onboard memory 214 for subsequent access by plant personnel handling an RFID reader/writer (e.g., the RFID reader/writer 206 shown in FIG. 2) at a much faster rate via the serial bus communication protocol.

As identified by brace 222, the communications associated with the field device, the HART modem 202, the microcontroller 204, the non-volatile memory 208 and the random access memory 207 (represented in FIG. 2 by solid lines 224) require power from the DCS 200 via the 2-wire connection 218 (i.e. these devices are loop powered). In contrast, as identified by brace 226, the communications within the RFID tag 210 (represented by dotted lines 228) and the wireless communication between the RFID antenna 216 and the RFID reader/writer 206 do not require loop power. Rather, the RFID communications in the illustrated example (e.g., those identified by the dotted lines 228) draw power from the RFID reader/writer 206 via electromagnetic induction. Thus, not only can the RFID tag 210 function without loop power, the RFID tag 210 can function without a battery supply or charged capacitors (e.g., which may be charged based on available loop power) such that data stored in the RFID onboard memory 214 of the RFID tag 210 is accessible any time the RFID reader/writer 206 is within range of the antenna 216.

In some examples, the amount of data that can be stored onboard the RFID tag 210 (e.g., within the RFID onboard memory 214) is relatively limited. For example, many known RFID tags typically have an upper memory threshold of 32 kilobytes. However, with RFID technology there is a tradeoff between the amount of memory available and the range over which data stored on the memory can be accessed wirelessly via an RFID reader/writer. For example, using the 32 kilobytes of memory may limit the RFID communication range to around 2 feet/0.6 metres, whereas smaller amounts of memory (e.g., 512 bits) can allow ranges exceeding 30 feet/9.1 metres (the range may also depend upon the antenna design of the RFID tag). In some examples, a range of 2 feet/0.6 metres may be acceptable. However, in other examples, where a field device is not readily accessible by plant personnel in the field (e.g., is placed up high, located behind other equipment, beyond safety boundaries, etc.), the RFID onboard memory 214 of the RFID tag 210 corresponding to such a field device may only contain 512 bits of data, which enables a range of approximately 30 feet/9.1 metres. Accordingly, the terms "local," "near," "nearby," and related terms associated with the location or position of plant personnel and/or an RFID reader/writer relative to a field device are expressly defined as being within the maximum range of communication between the RFID reader/writer and an RFID device coupled to the corresponding field device.

While the memory of the RFID tag 210 (e.g., the RFID onboard memory 214) is relatively limited, the non-volatile memory 208 associated with the microcontroller 204, in some example, can be much larger. In this manner, additional information related to the field device 122 can be stored that may otherwise be unavailable due to the limited memory space of the field device 122. For instance, in some examples, the non-volatile memory 208 stores maintenance and/or repair information gathered over the entire lifecycle of the field device 122 (or any portion thereof). Such information may include recommended parts lists, photos, model/serial number of the field device and/or associated parts, maintenance instructions and/or procedures, as well as a historical archive of the nature and timing of any device failures and resulting maintenance response (e.g., alarms, diagnostic test results, part replacements, etc.). In this manner, whenever maintenance technicians are examining the field device (e.g., during a routine walk-down or because of a device failure), they will have immediate and ready access to all relevant information to be able to assess the situation and/or implement appropriate next steps. Furthermore, in this manner, the same relevant information is even accessible if the device has been removed and relocated from the plant for the purposes of repair and/or more exhaustive diagnostic testing.

Further, as shown in the illustrated example, the communication between the microcontroller 204 and the RFID processor 212 requires loop power such that not everything that can be stored in the non-volatile memory 208 associated with the microcontroller 204 will be available to the RFID tag 210 when there is no power. Accordingly, in some examples, a subset of the data obtained from the field device 122 that is likely to be of the most benefit when there is no power is stored directly on the RFID tag 210 (e.g., in the RFID onboard memory 214) as is described more fully below. Even though it is unlikely that the RFID tag 210 can store all data gathered from the field device 122 because the amount of memory required exceeds the memory available in the RFID onboard memory 214, caching the data from the non-volatile memory 208 still provides the advantage of wirelessly accessing the data (via the RFID reader/writer 206) at communications speeds much higher than possible if the field device 122 were polled directly, which is subject to the slow communication speed of the HART protocol. However, in the illustrated example, loop power is used to enable the RFID tag 210 to communicate with the microcontroller 204 and access the non-volatile memory 208.

Implementing communications via RFID technology in accordance with the teachings disclosed herein has several advantages. First, RFID transmissions can occur whenever they are desired and plant personnel have an RFID reader/writer that is within a suitable range. That is, RFID communications between the RFID tag 210 and the RFID reader/writer 206 of the illustrated example are not dependent on the process control system 100 being in operation and powered up. In contrast, other known wireless radio transceivers used in process control systems (e.g., based on a ZigBee communication protocol) require a significant amount of power, which is often scavenged from available loop power provided to the corresponding field device over time until capacitors associated with the transceiver are sufficiently charged to power a signal transmission. Due to the tight power budget frequently associated with the low voltage power source provided to field devices, a delay of up to a minute may be needed to harvest sufficient power to transmit a HART command. Under such constraints, the types (and amounts) of wireless communications possible are significantly limited (e.g., to providing basic control information such as values for process variable, and/or other key parameters). For example, diagnosing and/or configuring a HART field device can involve well over 1000 HART commands. At approximately one HART command per minute, ZigBee based wireless transceivers are not practicable for such purposes. However, as RFID technology uses no other power than what is provided by an RFID reader/writer, data can be freely communicated whenever the RFID reader/writer is within range of the antenna of an RFID tag.

Another advantage of using the RFID tag 210 of the illustrated example to enable wireless communications is that such communications can be carried out even if the DCS 200 is shut down, the field device 122 is taken out of service, and/or power is otherwise cut off. Thus, not only can the RFID tag 210 communicate with the RFID reader/writer 206 when the field device 122 is without power, the same communications are still available even when the field device is taken offsite (e.g., when being shipped off for repairs) and/or before being installed and commissioned into a control system. Inasmuch as such communications are made without loop power, the corresponding data in such examples is stored onboard the RFID tag 210 (e.g., in the RFID onboard memory 214). In such examples, due to the memory constraints of the RFID tag 210, only the data that is most likely to be desired when there is no power is stored in the RFID tag 210 (any additional data gathered from the field device 122 may be stored in the non-volatile memory 208). In some examples, the data stored in the RFID tag 210 is associated with the identification (e.g., serial card data), maintenance, and/or commissioning and/or configuring of the field device 122. Storing such information on the RFID tag 210 is advantageous because the data can be used to improve the accuracy and speed with which the field device 122 may be repaired (many cases of which involve the field device being unpowered). For example, by storing the serial number of the field device 122 on the RFID tag 210 (which, in some examples, is physically attached to the field device even during shipping for repairs), the field device 122 can be identified during the shipping process (e.g., when it is crated on a truck) to reduce the potential of the field device 122 becoming lost and/or confused with another device.

Further, in some examples, the maintenance data associated with the field device 122 stored on the RFID onboard memory 214 of the RFID tag 210 may include the date of manufacture, a parts list (e.g., based on an engineering master (EM) string to reduce memory requirements), spare parts recommendations, images/photos of the field device 122 and/or corresponding parts, and/or maintenance records (e.g., the date of last maintenance and/or calibration, the date when the field device 122 was first installed, etc.). In accordance with the teachings disclosed herein, any or all of the above forms of maintenance data may be accessible before the field device 122 is coupled to a power supply to facilitate the ordering of parts and/or the speed at which issues may be assessed and ultimately repaired.

Additionally, in some examples, the RFID tag 210 may store the particular asset tag for the field device 122 and/or other data related to commissioning and/or configuring the field device 122. Generally, when a field device in commissioned or configured, a field technician executes a series of tests to verify the functionality of the field device and subsequently configures and calibrates the field device by storing operational settings in the field device for installation into the process plant. In some examples, such operational settings to configure and calibrate the field device are stored within the RFID onboard memory 214 of the RFID tag 210. In such examples, should the field device fail or otherwise need replacing, plant personnel can quickly retrieve the operational settings from the failed device (via the RFID reader/writer 206) and load them on to another RFID tag 210 corresponding to a replacement field device. In other examples, the RFID device 124 may be taken from the removed field device and coupled to the replacement field device to provide the stored operational settings directly to the new replacement device. By implementing either of the above examples, the time efficiency for switch outs of replacement field devices may be significantly improved. That is, the normally manual process of validating and/or populating variables and other parameters to commission and configure the field device 122 can be automated to significantly reduce labor costs and improve accuracy by reducing written errors. Furthermore, in some examples, a field device (e.g., the field device 122) may be temporarily replaced or removed from service while it is repaired before being re-installed within the process system. In some such examples, if any data associated with the field device 122 changes after being repaired, the memory in the RFID tag 210 may be updated (while the field device 122 is powered) such that the new information is accessible (via the RFID reader/writer 206) before the field device 122 is re-installed and re-commissioned in the process control system 100.

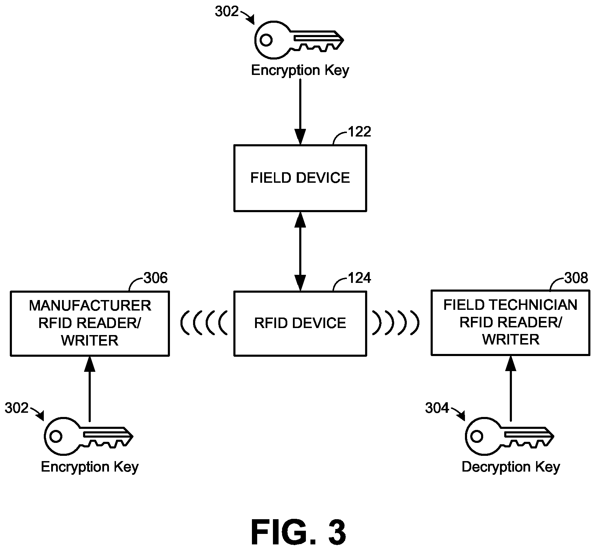

Another aspect of the teachings disclosed herein is the use of asymmetric cryptography to protect any or all of the data or records stored on the RFID device 124. As depicted in FIG. 3, asymmetric cryptography or encryption refers to a cryptographic system utilizing two separate cryptographic keys that asymmetrically control or protect the storage, access, and/or retrieval of data and/or records in the RFID device 124 associated with a field device 122. For instance, in some examples, an encryption key 302 serves to lock (e.g., encrypt) data written to the RFID device 124 memory. In some such examples, a separate decryption key 304 serves to unlock or read (e.g., decrypt) the data records. Further, in some examples, neither the encryption key 302 nor the decryption key 304 can perform both the encryption and decryption functions by itself. That is, the encryption key 302 cannot be used to access (e.g., read) the data and the decryption key 304 cannot be used to alter, remove, or overwrite the data.

Using asymmetric cryptography in this manner, manufacturers can provide manufacturer certified information associated with the field device 122 (e.g., serial card data, certified part information, etc.) without compromising the security of such certification, for example, from third party entities repairing and/or replacing components of the field device 122 with non-certified replicated parts and/or corresponding non-certified information. To do so, in some examples, the manufacturer uses the encryption key 302 to initially encrypt information at the time of manufacture. In some examples, encryption is accomplished via a RFID reader/writer maintained by the manufacturer that includes the encryption key (e.g., the manufacturer RFID reader/writer 306). Additionally or alternatively, in some examples, a manufacturer may provide the encryption key 302 directly with a newly manufactured field device 122 to encrypt the relevant information. Further, in some such examples, the encryption key 302 associated directly with the field device 122 enables data generated by the field device 122 during operation to also be secured through encrypted. In this manner, manufacturers can provide relevant data to be stored in the non-volatile memory 208 of the RFID device 124 that is protected (e.g., encrypted) to reduce the potential for such information being altered, removed, corrupted, or confused with any non-secured (e.g., unencrypted) information.

As a specific example, serial card data or certified part information may be encrypted and stored with the non-volatile memory of the RFID device 124 by a field device manufacturer (e.g., via the manufacturer RFID reader/writer 306 or based on the encryption key 302 within the field device 122 itself) to create secure, certified data specific to the field device 122 accessible throughout the lifecycle of the device without concern for the data being changed or mistaken for other information to ensure tracking and maintenance information is protected. Additionally or alternatively, in some examples the field device 122 may encrypt (e.g., via the encryption key 302) operational data (e.g. failure events or alerts) to provide secure operational records for later diagnostic analysis. In some such examples, the decryption key 304 may be provided or published to enable maintenance technicians or other users to readily access parts information or maintenance data (e.g. photographs, instruction manuals) via the field technician RFID reader/writer 310 (e.g., associated with the decryption key 304) but not enable the technicians or other third party entities to alter or remove (inadvertently or otherwise) the secured information. In this manner, technicians have ready access to helpful information without concern for errant data records and/or out of date information related to the field device 122 and without compromising security of the records created by the manufacturer.

As shown in the illustrated example, the difference between the manufacturer RFID reader/writer 306 and the field technician RFID reader/writer 308 is the cryptographic key 302, 304 with which each RFID reader/writer 306, 308 is associated. That is, each of the RFID reader/writer 306, 308 may be a same or similar off-the-shelf RFID reader/writer but each is supplied with either the encryption key 302 or the decryption key 304. In some examples, the encryption key 302 or the decryption key 304 is downloaded to the corresponding RFID reader/writer 306, 308 via a USB dongle or USB connection with a computer that has the corresponding cryptographic key 302, 304. In some examples, the encryption key 302 or the decryption key 304 is provided to the corresponding RFID reader/writer 306, 308 manually by entering the relevant information via a user interface (e.g., keypad) on the RFID reader/writer 306, 308.

Additionally or alternatively, in some examples, the encryption key 302 or the decryption key 304 is provided to the corresponding RFID reader/writer 306, 308 via a manufacturer provided key fob, authentication card, or security token. In some such examples, the key fob functions in connection with the corresponding RFID reader/writer 306, 308 based on near field communications. That is, when a key fob associated with the encryption key 302 is within range for near field communications (e.g., less than one foot), the capability of the manufacturer RFID reader/writer 306 to encrypt data is activated whereas when the key fob is out of range, the encryption functionality is unavailable. Similarly, when a key fob associated with the decryption key 304 is within range, the decryption functionality is available to the field technician RFID reader/writer 308 but becomes unavailable once the key fob is taken out of range. In some situations, the field device 122 may not be directly associated with the encryption key 302 and the manufacturer RFID reader/writer 306 may not be available for encryption when the manufacturer desires (e.g., when a manufacturer representative or other authorized personnel is visiting a client with previously purchased field devices). Accordingly, in some examples, the manufacturer authorized personnel is provided with the key fob associated with the encryption key 306 that, once authenticated, would enable the user to add desired encrypted information (e.g., an updated certified parts list) without a designated encryption RFID reader/writer (e.g., the manufacturer RFID reader/writer 306 maintained at the manufacturing site of the field device 122). In some such examples, the key fob may be used in conjunction with the field technician reader/writer 308 to encrypt the desired information. Further, in some examples, the key fob and/or the RFID reader/writer 308 can communicate with multiple RFID device 124 at one time (that are within the RFID signal range) to update each corresponding field device as appropriate.

Further, returning to FIG. 2, the communication speed of wireless transmissions using the RFID tag 210 is much faster than known wireless transceivers in a process control system. For example, in a wireless HART context, known transceivers are typically configured in serial communication with a wired HART modem such that the transceiver is limited to the speed of the HART protocol associated with the modem (e.g., 1200 baud). In contrast, the RFID device 124 is configured according to a high speed serial bus that provides much faster communications. Thus, while communications that are associated with data stored in the non-volatile memory 208 depend upon loop power, the speed at which data (previously polled from the field device 122) can be accessed is a significant improvement over polling the field device 122 directly.

A related advantage of the RFID device 124 arises from the fact that high speed communications are possible while the field device is powered. Frequently there is a no-touch rule in effect for process control equipment when the process is in operation such that engineers or other maintenance personnel can only access alerts, alarms, or diagnostic data for a field device via the plant database. While this information is accessible from a control room and/or remote terminal in a maintenance shop, such information is largely unavailable when personnel are local to the field device because known wireless transceivers are limited (e.g., by the speed/frequency of communications, as described above) and establish a hardwired connection to a field device may require unscrewing a terminal cap (which may violate plant safety policy) and/or taking the field device out of service, thereby disrupting operations of the plant. However, with the example RFID device 124, the high communication speeds and the wireless nature of the communications overcomes these obstacles for personnel with a handheld RFID reader/writer (e.g., the RFID reader/writer 206) at or near the location of the field device 122.

While an example manner of implementing the RFID device 124 of FIG. 1 is illustrated in FIG. 2, one or more of the elements, processes and/or devices illustrated in FIG. 2 may be combined, divided, re-arranged, omitted, eliminated and/or implemented in any other way. Further, the example HART modem 202, the example microcontroller 204, the example RAM 207, the example non-volatile memory 208, and the example main RFID processor 212, the example RFID onboard memory 214, and the example RFID antenna 216 of the example RFID tag 210, and/or, more generally, the example RFID device 124 of FIG. 2 may be implemented by hardware, software, firmware and/or any combination of hardware, software and/or firmware. Thus, for example, any of the example HART modem 202, the example microcontroller 204, the example RAM 207, the example non-volatile memory 208, and the example main RFID processor 212, the example RFID onboard memory 214, and the example RFID antenna 216 of the example RFID tag 210, and/or, more generally, the example RFID device 124 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, example HART modem 202, the example microcontroller 204, the example RAM 207, the example non-volatile memory 208, and/or the example main RFID processor 212, the example RFID onboard memory 214, and/or the example RFID antenna 216 of the example RFID tag 210 is/are hereby expressly defined to include a tangible computer readable storage device or storage disk such as a memory, a digital versatile disk (DVD), a compact disk (CD), a Blu-ray disk, etc. storing the software and/or firmware. Further still, the example RFID device 124 of FIG. 2 may include one or more elements, processes and/or devices in addition to, or instead of, those illustrated in FIG. 2, and/or may include more than one of any or all of the illustrated elements, processes and devices.

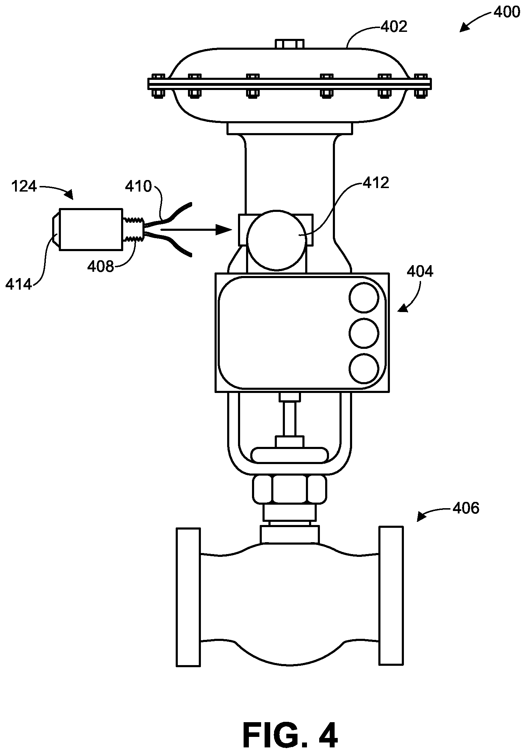

FIG. 4 illustrates a particular implementation of the example RFID device of FIGS. 1 and/or 2 to be physically and communicatively coupled to an example field device 400 comprising an actuator 402 and a valve controller 404 coupled to a valve 406. More particularly, in some examples, as shown in FIG. 4, the RFID device 124 is physically coupled to the field device 400 by fastening threads 408 of the RFID device 124 to the valve controller 404. Additionally, in some examples, the RFID device 124 is communicatively coupled to the field device 400 by connecting wires 410 of the RFID device 124 to the valve controller 404 within a terminal box 412 of the valve controller 404. In some examples, the threads 408 conform to standard piping threads such that the RFID device can be retrofitted to many existing field devices. In other examples, the RFID device 124 is built directly within a field device.

In some examples, the RFID antenna 216 of the RFID device 124 is located at an end 414 of the RFID device 124 opposite the threads 408. In some examples, the threads 408 can be used in conjunction with standard pipe fittings (e.g., an elbow) to orient the RFID antenna 216 in any desired direction independent of the valve controller 404. In other examples, the RFID antenna 216 may be omni-directional such that orientation of the RFID device is less significant.

As shown in the illustrated example of FIG. 4, by physically connecting and communicatively wiring the RFID device 124 to the field device 400, a hazardous area rating can be achieved that enables wireless communications to a nearby RFID reader/writer (e.g., the RFID reader/writer 206). Furthermore, the physical attachment of the RFID device 124 to the field device 400 enables the RFID tag 210 of the RFID device 124 to be permanently associated with the field device 400 (i.e., for as long as the RFID device remains fastened to the field device 400) even when the field device 400 is taken out of service, removed to a new location, and/or isolated from the rest of the process control system (e.g., for maintenance and/or repair).

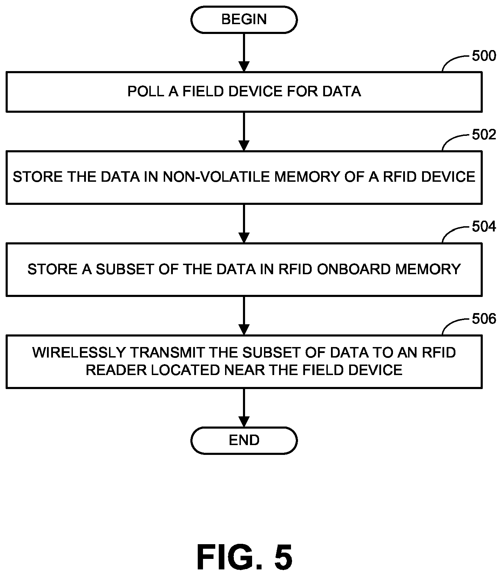

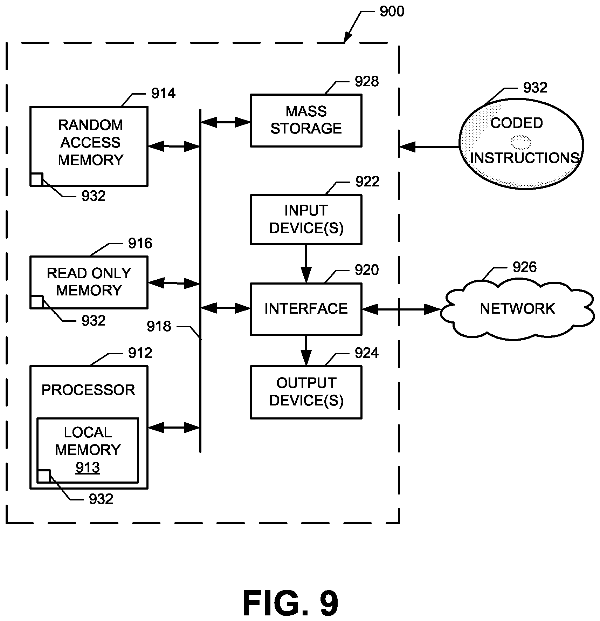

Flowcharts representative of example methods for implementing the RFID device 124 of FIG. 2 are shown in FIGS. 5-7. In these examples, the methods may be implemented as a program for execution by a processor such as the processor 912 shown in the example processor platform 900 discussed below in connection with FIG. 9. The program may be embodied in software stored on a tangible computer readable storage medium such as a CD-ROM, a floppy disk, a hard drive, a digital versatile disk (DVD), a Blu-ray disk, or a memory associated with the processor 912, but the entire program and/or parts thereof could alternatively be executed by a device other than the processor 912 and/or embodied in firmware or dedicated hardware. Further, although the example program is described with reference to the flowcharts illustrated in FIGS. 5-7, many other methods of implementing the example RFID device 124 may alternatively be used. For example, the order of execution of the blocks may be changed, and/or some of the blocks described may be changed, eliminated, or combined.

As mentioned above, the example methods of FIGS. 5-7 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals. As used herein, "tangible computer readable storage medium" and "tangible machine readable storage medium" are used interchangeably. Additionally or alternatively, the example methods of FIGS. 5-7 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable device or disk and to exclude propagating signals. As used herein, when the phrase "at least" is used as the transition term in a preamble of a claim, it is open-ended in the same manner as the term "comprising" is open ended.

FIG. 5 is a flowchart representative of an example method for implementing the example RFID device 124 of FIGS. 1, 2 and/or 4 to wirelessly communicate data from a field device to a local RFID reader/writer. In particular, the example method of FIG. 5 begins at block 500 with the microcontroller 204 polling a field device (e.g., the field device 122) for data. In some examples, the microcontroller 204 controls when to request and/or to interrogate the field device 122 for the data via the example modem 202. In other examples, the microcontroller 204 passively receives scheduled transmissions from the field device 122 (e.g., when in burst mode).

At block 502 of the example method, the non-volatile memory 208 of the RFID device 124 stores the data. One advantage of storing the data in the non-volatile memory 208 is that the data is accessible at much faster communication speeds because the transmissions of the data are no longer limited by the relatively slow HART communication protocol. Another advantage of the non-volatile memory 208 is the amount of data that can be stored. Field devices often have relatively limited memory capacities but the non-volatile memory can be of any suitable size to store and/or archive any desired information. In some examples, the field device is associated with an encryption key (e.g., the encryption key 302 of FIG. 3) such that the data stored in the non-volatile memory is secured and accessible only with a corresponding decryption key (e.g., the decryption key 304 of FIG. 3).

At block 504, the example RFID onboard memory 214 stores a subset of the data. Although the non-volatile memory 208 can be of any suitable size, the amount of memory available within the RFID tag 210 is relatively limited such that only some of the data retrieved from the field device 122 may be stored within the RFID onboard memory 214. Accordingly, in some examples, the subset of the data includes information associated with the identification, maintenance, and commissioning of the field device 122 as described above.

At block 506, the example RFID processor 212 wirelessly transmits the subset of the data to a RFID reader/writer (e.g., the example RFID reader/writer 206) located near (e.g., within transmission range) the field device 122. In some examples, where the data was encrypted, the RFID reader/writer is associated with the decryption key to enable access of the data. In the illustrated examples, block 500 requires loop power because the RFID device 124 is connected into the loop associated with the field device 122 and the field device 122 can only provide data when it is receiving such power. Additionally, blocks 502 and 504 require a power source (e.g., loop power and/or battery power) to enable the microcontroller 204 to write the collected data to the non-volatile memory 208 (block 502) and to provide the subset of the data to the RFID processor 212 to be written to the RFID onboard memory 214 (block 504). However, block 506 of the example program may be implemented with or without loop power (or battery power) because the RFID tag 210 is powered by the electromagnetic force generated by the nearby RFID reader/writer.

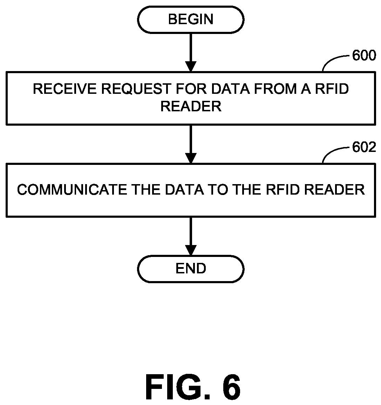

FIG. 6 is a flowchart representative of an example method for implementing the example RFID device 124 of FIGS. 1, 2 and/or 4 to provide data requested locally via a RFID reader/writer. In particular, the example method of FIG. 6 begins at block 600 with the example RFID processor 212 receiving a request for data from a RFID reader/writer (e.g., the example RFID reader/writer 206 via the example RFID antenna 216). At block 602, the example RFID processor 212 communicates the data to the example RFID reader/writer 206 via the example RFID antenna 216. In some examples, the data corresponds to data cached in the onboard memory 214 of the example RFID tag 210 previously provided from the non-volatile memory 208 associated with the microcontroller 204. In some examples, the communication of the data is based on RFID technology and, therefore, does not require loop power. Once the example RFID processor 212 communicates the data to the example RFID reader/writer 206 the example RFID tag 210 is ready to process another request from the RFID reader/writer 206 and the example method of FIG. 6 ends.

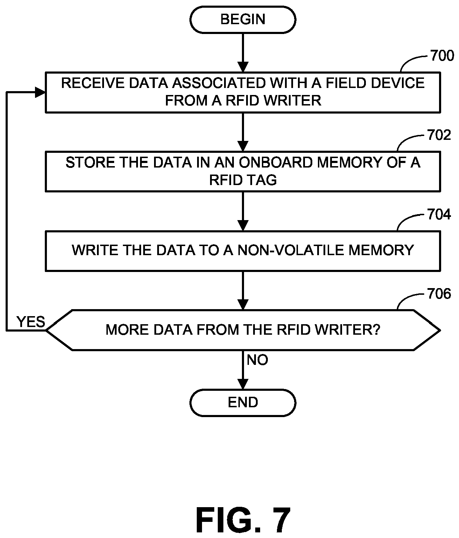

FIG. 7 is a flowchart representative of an example method for implementing the example RFID device 124 of FIGS. 1, 2 and/or 4 to provide data to the RFID device 124 associated with a field device generated locally via a RFID reader/writer. In particular, the example method of FIG. 7 begins at block 700 where the example RFID tag 210 (via the RFID antenna 216) receives data associated with a field device (e.g., the field device 122) from a RFID reader/writer (e.g., the example RFID reader/writer 206). In some examples, the data corresponds to new and/or additional maintenance information corresponding to the field device 122 (e.g., an updated recommended parts list). In some examples, the RFID reader/writer 206 is associated with an encryption key (e.g., the encryption key 302 of FIG. 3) such that the data is secured and subsequently accessible only with a corresponding decryption key (e.g., the decryption key 304 of FIG. 3). At block 702 the example RFID processor 212 stores the data in the onboard memory 214 of the RFID tag 210. In some examples, the communication of the data from the RFID reader/writer 206 to the onboard memory 214 of the RFID tag 210 is accomplished without loop power provided to the field device and/or the RFID device 124. At block 704, the example microcontroller 204 writes the data to the example non-volatile memory 208. In some examples, where the data is updated information, the microcontroller 204 overwrites previously stored information. At block 706 the example RFID tag 210 determines whether there is more data to be received from the RFID reader/writer. If the example RFID tag 210 determines there is more data, control returns to block 700. If the example RFID tag 210 determines there is not more data to be received, the example method of FIG. 7 ends.

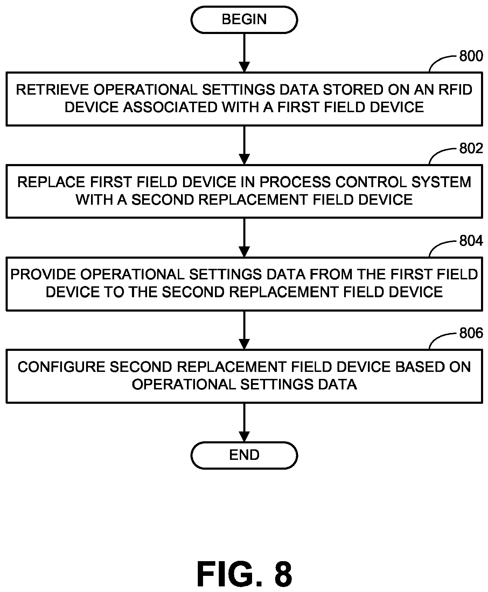

FIG. 8 is a flowchart representative of an example method of replacing a first field device (e.g., the field device 122 of FIG. 1) in a process control system (e.g., the example process control system 100 of FIG. 1) with a second replacement field device using the example RFID device 124 of FIGS. 1, 2, and/or 4 to automatically configure the second replacement field device. The example method begins at block 800 by retrieving operational settings data stored on an RFID device (e.g., the RFID device 124 of FIG. 1) associated with the first field device (i.e., the field device 122 to be removed). In some examples, the operational settings data corresponds to parameters and/or other inputs used in the commissioning and/or configuration of the field device 122. In some examples, the operational settings data is retrieved by requesting the data from the RFID device 124 via an RFID reader/writer (e.g., the RFID reader/writer 206) as described above. In other examples, the operational settings data is retrieved by removing (e.g., disconnecting) the RFID device 124 from the field device 122.

At block 802 of the example method of FIG. 8 the first field device (e.g., the field device 122) in the process control system 100 is replaced with a second replacement field device. At block 804 the operational settings data from the first field device is provided to the second replacement field device. In some examples, where the operational settings data was retrieved via an RFID reader/writer 206 (block 800), the operational settings data is wirelessly transmitted to a second RFID device 124 coupled to the second replacement field device. In other examples, where the RFID device 124 of the first field device 122 is removed to retrieve the operational settings data (block 800), the operational settings data is provided by connecting the RFID device 124 to the second replacement RFID 124. In either example, the second replacement field device has direct access to the operational settings data. Accordingly, at block 806, the second replacement field device is configured based on the operational settings data. Because the operational settings data originally stored in connection with the first field device 122 is transferred to the second replacement device, the configuration and commissioning of the second replacement device can be accomplished substantially automatically without the need for plant personnel to enter individual parameter values as would be otherwise required. Once the second replacement field device is configured (block 806), the example method of FIG. 8 ends.

FIG. 9 is a block diagram of an example processor platform 900 capable of executing instructions to perform the methods of FIGS. 5-7 to implement the RFID device 124 of FIG. 2. The processor platform 900 can be, for example, any type of computing device.

The processor platform 900 of the illustrated example includes a processor 912. The processor 912 of the illustrated example is hardware. For example, the processor 912 can be implemented by one or more integrated circuits, logic circuits, microprocessors or controllers from any desired family or manufacturer.

The processor 912 of the illustrated example includes a local memory 913 (e.g., a cache). The processor 912 of the illustrated example is in communication with a main memory including a volatile memory 914 and a non-volatile memory 916 via a bus 918. The volatile memory 914 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 916 may be implemented by flash memory and/or any other desired type of memory device. Access to the main memory 914, 916 is controlled by a memory controller.

The processor platform 900 of the illustrated example also includes an interface circuit 920. The interface circuit 920 may be implemented by any type of interface standard, such as an Ethernet interface, a universal serial bus (USB), and/or a PCI express interface.

In the illustrated example, one or more input devices 922 are connected to the interface circuit 920. The input device(s) 922 permit(s) a user to enter data and commands into the processor 912. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 924 are also connected to the interface circuit 920 of the illustrated example. The output devices 924 can be implemented, for example, by display devices (e.g., a light emitting diode (LED), an organic light emitting diode (OLED), a liquid crystal display, a cathode ray tube display (CRT), a touchscreen, a tactile output device, a light emitting diode (LED), a printer and/or speakers). The interface circuit 920 of the illustrated example, thus, typically includes a graphics driver card, a graphics driver chip or a graphics driver processor.

The interface circuit 920 of the illustrated example also includes a communication device such as a transmitter, a receiver, a transceiver, a modem and/or network interface card to facilitate exchange of data with external machines (e.g., computing devices of any kind) via a network 926 (e.g., an Ethernet connection, a digital subscriber line (DSL), a telephone line, coaxial cable, a cellular telephone system, etc.).

The processor platform 900 of the illustrated example also includes one or more mass storage devices 928 for storing software and/or data. Examples of such mass storage devices 928 include floppy disk drives, hard drive disks, compact disk drives, Blu-ray disk drives, RAID systems, and digital versatile disk (DVD) drives.

Coded instructions 932 to implement the methods of FIGS. 5-7 may be stored in the mass storage device 928, in the volatile memory 914, in the non-volatile memory 916, and/or on a removable tangible computer readable storage medium such as a CD or DVD.

## Claims

1. An apparatus for managing and maintaining process control system field devices using RFID devices, the apparatus comprising:
a non-volatile memory (208);
a radio frequency identification tag (210);
a microcontroller (204) coupled to the non-volatile memory (208) and the radio frequency identification tag (210); the apparatus being **characterized by** further comprising:
a modem (202) communicatively coupled to a field device (110, 112, 114, 120, 122) over a first communication bus and coupled to the microcontroller (204), over a second communication bus,
wherein the modem (202) converts data received from the field device (110, 112, 114, 120, 122) on a first communication protocol associated with the first communication bus to a second communication protocol associated with the second communication bus,
wherein transmission on the second communication bus is at a higher speed than the first communication bus;
wherein the non-volatile memory (208) is adapted to store data received from the field device (110, 112, 114, 120, 122), the data comprising maintenance records associated with the field device (110, 112, 114, 120, 122), and
wherein the radio-frequency identification tag (210) is adapted to store at least a subset of the data in an onboard memory (214); and
wherein the radio-frequency identification tag (210) is adapted to wirelessly transmit the at least subset of data to a radio-frequency identification reader (206), the non-volatile memory (208) and the radio-frequency identification tag (210) being physically coupled to the field device (110, 112, 114, 120, 122).

2. The apparatus of claim 1, wherein the radio-frequency tag is adapted to be powered by an electromagnetic field induced by the radio-frequency identification reader (206).

3. The apparatus of claim 2, wherein the radio-frequency identification tag (210) is to communicate with the radio-frequency identification reader (206) when the field device (110, 112, 114, 120, 122) is not powered.

4. The apparatus of any of the preceding claims, wherein power is provided by the field device (110, 112, 114, 120, 122).

5. The apparatus of any of the preceding claims, wherein the maintenance records are generated over a portion of a lifecycle of the field device (110, 112, 114, 120, 122).

6. The apparatus of any of the preceding claims, wherein the microcontroller (204) is to manage a schedule to request the data from the field device (110, 112, 114, 120, 122).

7. The apparatus of any of the preceding claims, wherein the data further comprises at least one of serial card information comprising a part identifier of the field device (110, 112, 114, 120, 122) or operational settings information associated with the configuration of the field device (110, 112, 114, 120, 122).

8. The apparatus of any of the preceding claims, wherein the at least subset of the data comprises at least one of a serial number associated with the field device (110, 112, 114, 120, 122), spare parts information associated with the field device (110, 112, 114, 120, 122), an image of at least one of the field device or parts associated with the field device, a date of manufacture of the field device, a date of installation of the field device (110, 112, 114, 120, 122), or a date of a most recent maintenance or calibration of the field device (110, 112, 114, 120, 122).

9. The apparatus of any of the preceding claims, wherein the data is to be encrypted based upon an encryption key (302) maintained by a manufacturer of the field device.

10. The apparatus of any of the preceding claims, wherein the data is to be decrypted based on a decryption key (304) corresponding to the encryption key (302), the decryption key (304) associated with the radio-frequency identification reader (206, 308).

11. A method of managing and maintaining process control system field devices using RFID devices comprising:
receiving data from a field device on a first communication protocol associated with a first communication bus,
converting the data received from the field device (110, 112, 114, 120, 122) on the first communication protocol to a second communication protocol associated with a second communication bus, wherein the second communication bus couples a non-volatile memory (208), a radio-frequency identification tag (210), and a microcontroller (204) and wherein the data transmissions on the second communication bus are at a higher speed than data transmissions on the first communication bus,
storing the data received from the field device (110, 112, 114, 120, 122) on the non-volatile memory (208) connected to the second communication bus, wherein the data received from the field device (110, 112, 114, 120, 122) includes maintenance records associated with the field device (110, 112, 114, 120, 122),
storing a subset of the data of the non-volatile memory (208) in an onboard memory (214) of the radio-frequency identification tag (210);
and
wirelessly transmitting the at least a subset of data, via the radio-frequency identification tag (210) communicatively coupled to the non-volatile memory (208), to a radio-frequency identification reader (206).

12. The method of claim 11, wherein the maintenance records are generated over a portion of a lifecycle of the field device (110, 112, 114, 120, 122).

13. The method of any of the preceding claims 11-12, further comprising powering the radio-frequency identification tag (210) using an electromagnetic field induced by the radio-frequency identification reader (206) when transmitting the first data.

14. The method of any of the preceding claims 11-13, further comprising scheduling a request to poll the field device (110, 112, 114, 120, 122) to obtain the data.

15. The method of any of the preceding claims 11-14, wherein the data further comprises serial card information comprising a part identifier of the field device (110, 112, 114, 120, 122) or operational settings information associated with the configuration of the field device (110, 112, 114, 120, 122).

16. The method of any of the preceding claims 11-15, wherein the subset of the data comprises at least one of a serial number associated with the field device (110, 112, 114, 120, 122), spare parts information associated with the field device (110, 112, 114, 120, 122), an image of at least one of the field device (110, 112, 114, 120, 122) or parts associated with the field device (110, 112, 114, 120, 122), a date of manufacture of the field device (110, 112, 114, 120, 122), a date of installation of the field device (110, 112, 114, 120, 122), or a date of a most recent maintenance or calibration of the field device (110, 112, 114, 120, 122).

17. The method of any of the preceding claims 11-16, further comprising transmitting the subset of the data when the field device (110, 112, 114, 120, 122) is removed from the process control system.

18. The method of any of the preceding claims 11-17, further comprising:
removing the field device (110, 112, 114, 120, 122) from the process control system;
replacing the removed field device (110, 112, 114, 120, 122) with a replacement field device in the process control system;
transferring at least a subset of the data stored in the non-volatile memory (208) coupled to the removed field device (110, 112, 114, 120, 122) to a second non-volatile memory coupled to the replacement field device (110, 112, 114, 120, 122), the subset of the data to include operational settings information associated with the removed field device (110, 112, 114, 120, 122); and
configuring the replacement field device based on the operational settings information.

19. The method of any of the preceding claims 11-18, wherein the data is encrypted based upon an encryption key (302) maintained by a manufacturer of the field device (110, 112, 114, 120, 122).

20. The method of any of the preceding claims 11-19, further comprising decrypting the data based on a decryption key (304) corresponding to the encryption key (302), the decryption key (304) associated with the radio-frequency identification reader (206, 308).

## Patentansprüche

1. Vorrichtung zum Verwalten und Warten von Prozesssteuerungssystemfeldgeräten, welche RFID-Geräte verwenden, wobei die Vorrichtung aufweist:
einen nichtflüchtigen Speicher (208),
ein Hochfrequenzidentifikationsetikett (210),
einen Mikrocontroller (204), der mit dem nichtflüchtigen Speicher (208) und dem Hochfrequenzidentifikationsetikett (210) verbunden ist, wobei die Vorrichtung **dadurch gekennzeichnet ist, dass** sie weiter aufweist:
ein Modem (202), das kommunikativ über einen ersten Kommunikationsbus mit einem Feldgerät (110, 112, 114, 120, 122) verbunden ist und das über einen zweiten Kommunikationsbus mit dem Mikrocontroller (204) verbunden ist,
wobei das Modem (202) Daten, die es von dem Feldgerät (110, 112, 114, 120, 122) empfangen hat, von einem ersten Kommunikationsprotokoll, das dem ersten Kommunikationsbus zugeordnet ist, in ein zweites Kommunikationsprotokoll, das dem zweiten Kommunikationsbus zugeordnet ist, umwandelt,
wobei die Übertragung auf dem zweiten Kommunikationsbus mit einer höheren Geschwindigkeit als auf dem ersten Kommunikationsbus erfolgt,
wobei der nichtflüchtige Speicher (208) ausgestaltet ist, um die Daten, die von dem Feldgerät (110, 112, 114, 120, 122) empfangen worden sind, zu speichern, wobei die Daten Wartungsaufzeichnungen, die dem Feldgerät (110, 112, 114, 120, 122) zugeordnet sind, umfassen, und
wobei das Hochfrequenzidentifikationsetikett (210) ausgestaltet ist, um wenigstens eine Teilmenge der Daten in einem integriert angeordneten Speicher (214) zu speichern, und
wobei das Hochfrequenzidentifikationsetikett (210) ausgestaltet ist, um wenigstens einen Teilmenge der Daten an einen Hochfrequenzidentifikationsleser (206) drahtlos zu übertragen, wobei der nichtflüchtige Speicher (208) und das Hochfrequenzidentifikationsetikett (210) physisch mit dem Feldgerät (110, 112, 114, 120, 122) verbunden sind.

2. Vorrichtung nach Anspruch 1, wobei das Hochfrequenzetikett ausgestaltet ist, um durch ein elektromagnetisches Feld, das durch den Hochfrequenzidentifikationsleser (206) induziert wird, angetrieben zu werden.

3. Vorrichtung nach Anspruch 2, wobei das Hochfrequenzidentifikationsetikett (210) ausgestaltet ist, um mit dem Hochfrequenzidentifikationsleser (206) zu kommunizieren, wenn das Feldgerät (110, 112, 114, 120, 122) nicht mit Strom versorgt wird.

4. Vorrichtung nach einem der vorhergehenden Ansprüche, wobei der Strom durch das Feldgerät (110, 112, 114, 120, 122) bereitgestellt wird.

5. Vorrichtung nach einem der vorhergehenden Ansprüche, wobei die Wartungsaufzeichnungen über einen Teil eines Lebenszyklus des Feldgeräts (110, 112, 114, 120, 122) erzeugt worden sind.

6. Vorrichtung nach einem der vorhergehenden Ansprüche, wobei der Mikrocontroller (204) einen Zeitplan verwalten soll, um die Daten von dem Feldgerät (110, 112, 114, 120, 122) anzufordern.

7. Vorrichtung nach einem der vorhergehenden Ansprüche, wobei die Daten weiter mindestens eine serielle Karteninformation aufweisen, die eine Teilekennung des Feldgeräts (110, 112, 114, 120, 122) oder Betriebseinstellungsinformationen, die zu der Konfiguration des Feldgeräts (110, 112, 114, 120, 122) zugeordnet sind, aufweist.

8. Vorrichtung nach einem der vorhergehenden Ansprüche, wobei wenigstens die Teilmenge der Daten mindestens eines von einer Seriennummer, die dem Feldgerät (110, 112, 114, 120, 122) zugeordnet ist, von Ersatzteilinformationen, die dem Feldgerät (110, 112, 114, 120, 122) zugeordnet sind, von einen Bild von mindestens einem Feldgerät oder Teilen, die dem Feldgerät zugeordnet sind, von einen Datum der Herstellung des Feldgeräts, von einen Datum der Installation des Feldgeräts (110, 112, 114, 120, 122) oder von einen Datum einer letzten Wartung oder Kalibrierung des Feldgeräts (110, 112, 114, 120, 122) aufweist.

9. Vorrichtung nach einem der vorhergehenden Ansprüche, wobei die Daten auf der Grundlage eines Verschlüsselungsschlüssels (302), der von einem Hersteller des Feldgerätes verwaltet wird, verschlüsselt sein sollen.

10. Vorrichtung nach einem der vorhergehenden Ansprüche, wobei die Daten basierend auf einem Entschlüsselungsschlüssel (304), der dem Verschlüsselungsschlüssel (302) entspricht, entschlüsselt werden sollen, wobei der Entschlüsselungsschlüssel (304) dem Hochfrequenzidentifikationsleser (206, 308) zugeordnet ist.

11. Verfahren zur Verwaltung und Wartung von Prozesssteuerungssystemfeldgeräten, welche RFID-Geräte verwenden, wobei das Verfahren umfasst:
ein Empfangen von Daten von einem Feldgerät über ein erstes Kommunikationsprotokoll, das einem ersten Kommunikationsbus zugeordnet ist,
ein Umwandeln der Daten, die von dem Feldgerät (110, 112, 114, 120, 122) empfangen worden sind, von dem ersten Kommunikationsprotokoll in ein zweites Kommunikationsprotokoll, das einem zweiten Kommunikationsbus zugeordnet ist, wobei der zweite Kommunikationsbus einen nichtflüchtigen Speicher (208), ein Hochfrequenzidentifikationsetikett (210) und einen Mikrocontroller (204) verbindet, und wobei die Datenübertragungen auf dem zweiten Kommunikationsbus schneller als die Datenübertragungen auf dem ersten Kommunikationsbus sind,
ein Speichern der Daten, die von dem Feldgerät (110, 112, 114, 120, 122) empfangen worden sind, in den nichtflüchtigen Speicher (208), der mit dem zweiten Kommunikationsbus verbunden ist, wobei die Daten, die von dem Feldgerät (110, 112, 114, 120, 122) empfangen worden sind, Wartungsaufzeichnungen, die dem Feldgerät (110, 112, 114, 120, 122) zugeordnet sind, enthalten,
ein Speichern einer Teilmenge der Daten des nichtflüchtigen Speichers (208) in einem integriert angeordneten Speicher (214) des Hochfrequenzidentifikationsetiketts (210), und
ein drahtloses Übertragen von der wenigstens einen Teilmenge der Daten über die Hochfrequenzidentifikationsetikett (210), das kommunikativ mit dem nichtflüchtigen Speicher (208) verbunden ist, an einen Hochfrequenzidentifikationsleser (206).

12. Verfahren nach Anspruch 11, wobei die Wartungsaufzeichnungen über einen Teil eines Lebenszyklus des Feldgeräts (110, 112, 114, 120, 122) erzeugt werden.

13. Verfahren nach einem der vorhergehenden Ansprüche 11 bis 12, das ferner ein Versorgen des Hochfrequenzidentifikationsetiketts (210) mit Strom mittels eines elektromagnetischen Felds umfasst, das durch den Hochfrequenzidentifikationsleser (206) bei dem Übertragen der ersten Daten induziert wird.

14. Verfahren nach einem der vorhergehenden Ansprüche 11 bis 13, wobei um die Daten zu erhalten, eine Anfrage zum Abfragen des Feldgeräts (110, 112, 114, 120, 122), zeitlich geplant wird.

15. Verfahren nach einem der vorhergehenden Ansprüche 11 bis 14, wobei die Daten ferner serielle Karteninformationen aufweisen, die eine Teilekennung des Feldgeräts (110, 112, 114, 120, 122) oder Informationen zu Betriebseinstellungen, die der Konfiguration des Feldgeräts (110, 112, 114, 120, 122) zugeordnet sind, aufweisen.

16. Verfahren nach einem der vorhergehenden Ansprüche 11 bis 15, wobei die Teilmenge von Daten mindestens eines von einer Seriennummer (110, 112, 114, 120, 122), die dem Feldgerät zugeordnet ist, von Ersatzteilinformationen, die dem Feldgerät (110, 112, 114, 120, 122) zugeordnet sind, von einem Bild von mindestens einem der Feldgeräte (110, 112, 114, 120, 122) oder von Teilen, die dem Feldgerät (110, 112, 114, 120, 122) zugeordnet sind, von einem Herstellungsdatum des Feldgeräts (110, 112, 114, 120, 122), von einem Installationsdatum des Feldgeräts (110, 112, 114, 120, 122) oder von einem Datum einer letzten Wartung oder Kalibrierung des Feldgeräts (110, 112, 114, 120, 122) aufweist.

17. Verfahren nach einem der vorhergehenden Ansprüche 11 bis 16, das ferner ein Übertragen der Teilmenge der Daten umfasst, wenn das Feldgerät (110, 112, 114, 120, 122) aus dem Prozesssteuerungssystem entfernt worden ist.

18. Verfahren nach einem der vorhergehenden Ansprüche 11 bis 17, das ferner umfasst:
ein Entfernen des Feldgeräts (110, 112, 114, 120, 122) aus dem Prozesssteuerungssystem,
ein Ersetzen des entfernten Feldgeräts (110, 112, 114, 120, 122) durch ein Ersatzfeldgerät in dem Prozesssteuerungssystem,
ein Übertragen von mindestens einer Teilmenge der Daten, die in dem nichtflüchtigen Speicher (208) gespeichert sind, der mit dem entfernten Feldgerät (110, 112, 114, 120, 122) verbunden ist, zu einem zweiten nichtflüchtigen Speicher, der mit dem Ersatzfeldgerät (110, 112, 114, 120, 122) verbunden ist, wobei die Teilmenge der Daten Informationen zu Betriebseinstellungen enthält, die dem entfernten Feldgerät (110, 112, 114, 120, 122) zugeordnet sind, und
ein Konfigurieren des Ersatzfeldgeräts anhand der Informationen zu den Betriebseinstellungen.

19. Verfahren nach einem der vorhergehenden Ansprüche 11 bis 18, wobei die Daten auf der Grundlage eines Verschlüsselungsschlüssels (302), der von einem Hersteller des Feldgeräts (110, 112, 114, 120, 122) verwaltet wird, verschlüsselt werden.

20. Verfahren nach einem der vorhergehenden Ansprüche 11 bis 19, das ferner ein Entschlüsseln der Daten basierend auf einem Entschlüsselungsschlüssel (304) umfasst, der dem Verschlüsselungsschlüssel (302) zugeordnet ist, wobei der Entschlüsselungsschlüssel (304) dem Hochfrequenzidentifikationsleser (206, 308) zugeordnet ist.

## Revendications

1. Appareil pour gérer et assurer la maintenance de dispositifs de terrain de système de commande de processus en utilisant des dispositifs RFID, l'appareil comprenant :
une mémoire non volatile (208) ;
une étiquette d'identification radiofréquence (210) ;
un microcontrôleur (204) couplé à la mémoire non volatile (208) et à l'étiquette d'identification radiofréquence (210) ;
l'appareil étant **caractérisé en ce qu'**il comprend en outre :
un modem (202) couplé de manière communicative à un dispositif de terrain (110, 112, 114, 120, 122) sur un premier bus de communication et couplé au microcontrôleur (204), sur un second bus de communication,
dans lequel le modem (202) convertit des données reçues en provenance du dispositif de terrain (110, 112, 114, 120, 122) sur un premier protocole de communication associé au premier bus de communication en un second protocole de communication associé au second bus de communication,
dans lequel une transmission sur le second bus de communication se fait à une vitesse plus élevée que sur le premier bus de communication ;
dans lequel la mémoire non volatile (208) est adaptée pour stocker des données reçues en provenance du dispositif de terrain (110, 112, 114, 120, 122), les données comprenant des enregistrements de maintenance associés au dispositif de terrain (110, 112, 114, 120, 122), et
dans lequel l'étiquette d'identification radiofréquence (210) est adaptée pour stocker au moins un sous-ensemble des données dans une mémoire embarquée (214) ; et
dans lequel l'étiquette d'identification radiofréquence (210) est adaptée pour transmettre de manière sans fil l'au moins sous-ensemble de données à un lecteur d'identification radiofréquence (206), la mémoire non volatile (208) et l'étiquette d'identification radiofréquence (210) étant couplées physiquement au dispositif de terrain (110, 112, 114, 120, 122).

2. Appareil selon la revendication 1, dans lequel l'étiquette radiofréquence est adaptée pour être alimentée par un champ électromagnétique induit par le lecteur d'identification radiofréquence (206).

3. Appareil selon la revendication 2, dans lequel l'étiquette d'identification radiofréquence (210) doit communiquer avec le lecteur d'identification radiofréquence (206) lorsque le dispositif de terrain (110, 112, 114, 120, 122) n'est pas alimenté.

4. Appareil selon l'une des revendications précédentes, dans lequel l'alimentation est fournie par le dispositif de terrain (110, 112, 114, 120, 122).

5. Appareil selon l'une des revendications précédentes, dans lequel les enregistrements de maintenance sont générés sur une partie d'un cycle de vie du dispositif de terrain (110, 112, 114, 120, 122).

6. Appareil selon l'une des revendications précédentes, dans lequel le microcontrôleur (204) doit gérer un planning pour demander les données au dispositif de terrain (110, 112, 114, 120, 122).

7. Appareil selon l'une des revendications précédentes, dans lequel les données comprennent en outre au moins l'une parmi des informations de carte série comprenant un identifiant de pièce du dispositif de terrain (110, 112, 114, 120, 122) ou des informations de réglages opérationnels associées à la configuration du dispositif de terrain (110, 112, 114, 120, 122).

8. Appareil selon l'une des revendications précédentes, dans lequel l'au moins sous-ensemble des données comprend au moins l'un parmi un numéro de série associé au dispositif de terrain (110, 112, 114, 120, 122), des informations de pièces de rechange associées au dispositif de terrain (110, 112, 114, 120, 122), une image d'au moins l'un du dispositif de terrain ou de pièces associées au dispositif de terrain, une date de fabrication du dispositif de terrain, une date d'installation du dispositif de terrain (110, 112, 114, 120, 122), ou une date d'une maintenance ou d'un étalonnage le plus récent du dispositif de terrain (110, 112, 114, 120, 122).

9. Appareil selon l'une des revendications précédentes, dans lequel les données doivent être chiffrées sur la base d'une clé de chiffrement (302) maintenue par un fabricant du dispositif de terrain.

10. Appareil selon l'une des revendications précédentes, dans lequel les données doivent être déchiffrées sur la base d'une clé de déchiffrement (304) correspondant à la clé de chiffrement (302), la clé de déchiffrement (304) associée au lecteur d'identification radiofréquence (206, 308).

11. Procédé de gestion et de maintenance de dispositifs de terrain de système de commande de processus en utilisant des dispositifs RFID comprenant :
la réception de données en provenance d'un dispositif de terrain sur un premier protocole de communication associé à un premier bus de communication,
la conversion des données reçues en provenance du dispositif de terrain (110, 112, 114, 120, 122) sur le premier protocole de communication en un second protocole de communication associé à un second bus de communication, dans lequel le second bus de communication couple une mémoire non volatile (208), une étiquette d'identification radiofréquence (210), et un microcontrôleur (204) et dans lequel les transmissions de données sur le second bus de communication se font à une vitesse plus élevée que des transmissions de données sur le premier bus de communication,
le stockage des données reçues en provenance du dispositif de terrain (110, 112, 114, 120, 122) sur la mémoire non volatile (208) connectée au second bus de communication, dans lequel les données reçues en provenance du dispositif de terrain (110, 112, 114, 120, 122) incluent des enregistrements de maintenance associés au dispositif de terrain (110, 112, 114, 120, 122),
le stockage d'un sous-ensemble des données de la mémoire non volatile (208) dans une mémoire embarquée (214) de l'étiquette d'identification radiofréquence (210) ;
et
la transmission sans fil de l'au moins un sous-ensemble de données, via l'étiquette d'identification radiofréquence (210) couplée de manière communicative à la mémoire non volatile (208), à un lecteur d'identification radiofréquence (206).

12. Procédé selon la revendication 11, dans lequel les enregistrements de maintenance sont générés sur une partie d'un cycle de vie du dispositif de terrain (110, 112, 114, 120, 122).

13. Procédé selon l'une des revendications 11 et 12 précédentes, comprenant en outre l'alimentation de l'étiquette d'identification radiofréquence (210) en utilisant un champ électromagnétique induit par le lecteur d'identification radiofréquence (206) lors de la transmission des premières données.

14. Procédé selon l'une des revendications 11 à 13 précédentes, comprenant en outre la planification d'une demande pour interroger le dispositif de terrain (110, 112, 114, 120, 122) afin d'obtenir les données.

15. Procédé selon l'une des revendications 11 à 14 précédentes, dans lequel les données comprennent en outre des informations de carte série comprenant un identifiant de pièce du dispositif de terrain (110, 112, 114, 120, 122) ou des informations de réglages opérationnels associées à la configuration du dispositif de terrain (110, 112, 114, 120, 122).

16. Procédé selon l'une des revendications 11 à 15 précédentes, dans lequel le sous-ensemble des données comprend au moins l'un parmi un numéro de série associé au dispositif de terrain (110, 112, 114, 120, 122), des informations de pièces de rechange associées au dispositif de terrain (110, 112, 114, 120, 122), une image d'au moins l'un du dispositif de terrain (110, 112, 114, 120, 122) ou de pièces associées au dispositif de terrain (110, 112, 114, 120, 122), une date de fabrication du dispositif de terrain (110, 112, 114, 120, 122), une date d'installation du dispositif de terrain (110, 112, 114, 120, 122), ou une date d'une maintenance ou d'un étalonnage le plus récent du dispositif de terrain (110, 112, 114, 120, 122).

17. Procédé selon l'une des revendications 11 à 16 précédentes, comprenant en outre la transmission du sous-ensemble des données lorsque le dispositif de terrain (110, 112, 114, 120, 122) est retiré du système de commande de processus.

18. Procédé selon l'une des revendications 11 à 17 précédentes, comprenant en outre :
le retrait du dispositif de terrain (110, 112, 114, 120, 122) du système de commande de processus ;
le remplacement du dispositif de terrain retiré (110, 112, 114, 120, 122) par un dispositif de terrain de remplacement dans le système de commande de processus ;
le transfert d'au moins un sous-ensemble des données stockées dans la mémoire non volatile (208) couplée au dispositif de terrain retiré (110, 112, 114, 120, 122) vers une seconde mémoire non volatile couplée au dispositif de terrain de remplacement (110, 112, 114, 120, 122), le sous-ensemble des données devant inclure des informations de réglages opérationnels associées au dispositif de terrain retiré (110, 112, 114, 120, 122) ; et
la configuration du dispositif de terrain de remplacement sur la base des informations de réglages opérationnels.

19. Procédé selon l'une des revendications 11 à 18 précédentes, dans lequel les données sont chiffrées sur la base d'une clé de chiffrement (302) maintenue par un fabricant du dispositif de terrain (110, 112, 114, 120, 122) .

20. Procédé selon l'une des revendications 11 à 19 précédentes, comprenant en outre le déchiffrement des données sur la base d'une clé de déchiffrement (304) correspondant à la clé de chiffrement (302), la clé de déchiffrement (304) associée au lecteur d'identification radiofréquence (206, 308).
